# EUROPEAN PATENT SPECIFICATION

(11) **EP 2 048 035 B1**
(45) Date of publication and mention of the grant of the patent: **10.03.2010**
(21) Application number: 08017723.1
(22) Date of filing: 09.10.2008
(51) Int. Cl.: B60R 11/02

(54) **Automotive display**
Automobilanzeige
Affichage dans une automobile

(30) Priority: 12.10.2007 TW 96217120 U
(43) Date of publication of application: 15.04.2009
(73) Proprietor: Equus Inc., Hsi-Chih-City Taipei Hsien (TW)
(72) Inventor: Chen, Duke, Hsi-Chih-City Taipei Hsien (TW)
(74) Representative: Urner, Peter

(56) References cited:
- EP-A- 1 666 307
- WO-A-2006/135633
- WO-A-2007/016613
- JP-A- 2002 283 926
- JP-A- 2003 054 322

## Description

### BACKGROUND OF THE INVENTION

### 1. Field of the Invention

The present invention relates to a displaying device, and in particular to an automotive display that can be arranged in a car.

### 2. Description of Prior Art

With the mature development of wireless technology and associated video apparatuses, watching television programs in a car has already come true. Thus, an automotive display has become a popular and necessary device in a car.

Although the automotive display has become a popular and necessary device in a car, only a few top-class cars are provided with a space in advance for such an automotive display. Most of the cars are not provided with a position for mounting the automotive display. Therefore, currently, the automotive display is arranged in the central position inside the car roof, thereby allowing the passengers to watch the video programs.

Although arranging the automotive display in the central position inside the car roof can allow the passengers to watch video programs, such an arrangement may hinder the driver from watching the moving vehicles in back of his/her car, and thus causes a danger in driving. Therefore, in order to eliminate the blind spot in driving, in the conventional automotive display, a plurality of connecting rods is used to pivotally support the screen of the display without mounting the display on the inside surface of the car roof directly via a base. In this way, the screen can be arranged in a much lower position. As a result, a hollowed construction is formed between the screen and the original base of the display, so that there is no obstacle to the rear-view mirror in driving, thereby ensuring the safety in driving.

Although the afore-mentioned automotive display utilizes a plurality of supports to form a hollowed construction to avoid from obstructing the field of view in driving, these connecting rods are pivotally connected to the screen so as to locate the screen firmly. Since each of the pivotally connecting positions is fixed, the size of the hollowed construction formed between the screen and the base cannot be adjusted. As a result, it is impossible to properly adjust the field of view in driving for different drivers, which causes another dead spot and possible danger in driving. Therefore, the conventional automotive display still has defects.

EP 1 666 307 A1, which discloses the preamble of claim 1, describes an automotive display provided on a top surface within a car body. This display comprises a base fixed to the top surface within the car body, a telescopic connecting rod structure pivotally connected to one side of the base, and a screen. The screen is connected to the other end of the connecting rod structure. To adjust the position of the screen with respect to the base the length of the telescopic connecting rod structure can be changed.

### SUMMARY OF THE INVENTION

In view of the above drawbacks, the present invention is to provide an automotive display having a transmission means. The connecting rods connecting the base and the screen of the display are each provided with an accommodating groove that has a rack. By means of the movement of the gear on the rack, the size of the hollowed construction between the base and screen of the display can be adjusted, thereby ensuring that the field of view in driving is unobstructed. Furthermore, via the arrangement of gears and racks, the automotive display can be folded and stored easily.

The present invention is to provide an automotive display, which includes a base, a plurality of connecting rods and a screen. The base is fixed on a top surface within a car body. The connecting rods are pivotally connected to both sides of the base, so that these connecting rods can rotate with respect to the base. Furthermore, the inner surface of each connecting rod is recessed to form accommodating groove. One side of each accommodating groove is provided with a rack. The upper ends on both sides of the screen are provided with a fixing mount respectively. A pivotal shaft protrudes outwards from each fixing mount. Each pivotal shaft is inserted through a gear. Each gear is accommodated in the accommodating groove and engaged with the rack, thereby driving the screen to move up and down and ensuring that the field of view in driving is unobstructed.

### BRIEF DESCRIPTION OF THE DRAWINGS

Fig. 1 is an exploded perspective view showing the structure of the present invention;
Fig. 2 is an assembled view showing the structure of the present invention;
Fig. 3 is a perspective view of the present invention;
Fig. 4 is a schematic view (I) showing the operation of the connecting rods of the present invention;
Fig. 5 is a schematic view (II) showing the operation of the connecting rods of the present invention;
Fig. 6 is front view showing the operation of the present invention;
Fig. 7 is a schematic view showing the automotive display of the present invention; and
Fig. 8 is a schematic view (III) showing the operation of the connecting rods of the present invention.

### DETAILED DESCRIPTION OF THE INVENTION

The detailed description and technical contents of the present invention will be explained with reference to the accompanying drawings.

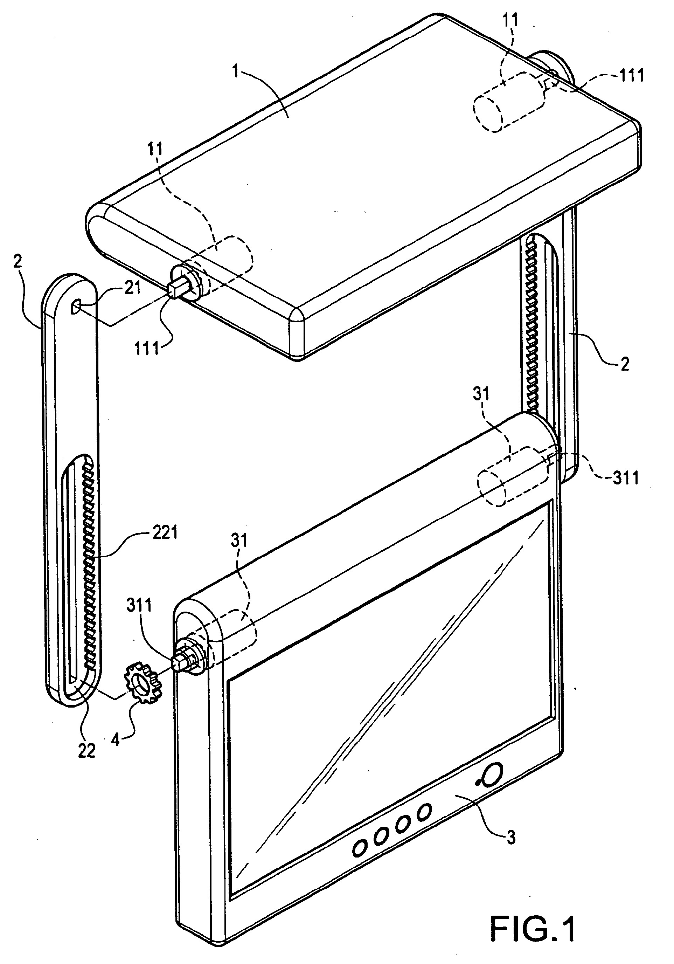

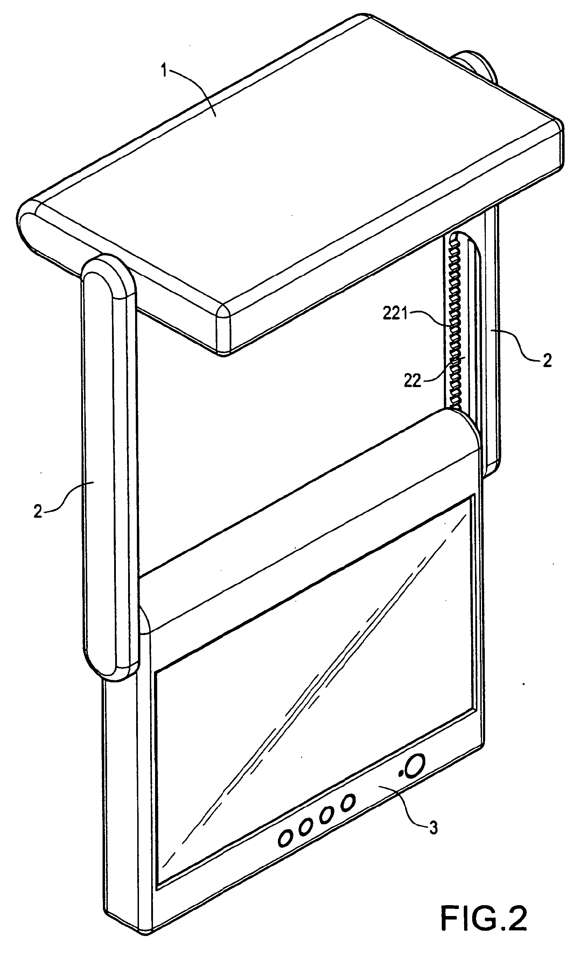

Please refer to Fig. 1, which is an exploded perspective view showing the structure of the present invention. As shown in Fig. 1, the automotive display of the present invention includes a base 1, at least one connecting rods 2 (a plurality of connecting rods 2 in the present embodiment) and a screen 3. The base 1 is horizontally attached to the top surface with a car body (Fig. 10) to serve as a support for the screen 3. Both sides of the base 1 are provided with a connecting mount 11 respectively. These connecting mounts 11 are fixedly provided within both sides of the base 1 respectively. A pivotal shaft 111 protrudes outwards from each connecting mount 11. The pivotal shaft 111 is rotatable with respect to the connecting mount 11. The surface adjacent to one end of each connecting rod 2 is provided with a trough 21 that is pivotally connected to the pivotal shaft 111 of the connecting mount 11. In this way, the connecting mount 11 can drive the connecting rod 2 to rotate. Further, the surface of the same end of connecting rod 2 on which the trough 21 is located is provided with an accommodating groove 22. The accommodating groove 22 is elongate. One side of the accommodating groove 22 is provided with a rack 221. The screen 3 is supported by the connecting rods 2. The ends on both sides of the screen 3 are provided with a fixing mount 31 respectively. These fixing mounts 31 are fixed within the screen 3 and extend outwards to form a pivotal shaft 311 respectively. Each pivotal shaft 311 passes through a gear 4. After the gear 4 is fixedly connected with each pivotal shaft 311, the gears 4 are accommodated in the accommodating grooves 22 of the connecting rods 2. Each gear 4 is engaged with the rack 221 on one side of the accommodating groove 21. Via this arrangement, each gear 4 can rotate and move up and down in the accommodating groove 21, thereby driving the screen 3 to move so as to change the position of the screen 3 with respect to the connecting rods 2 (later described). Fig. 2 shows the completely assembled structure of the present invention.

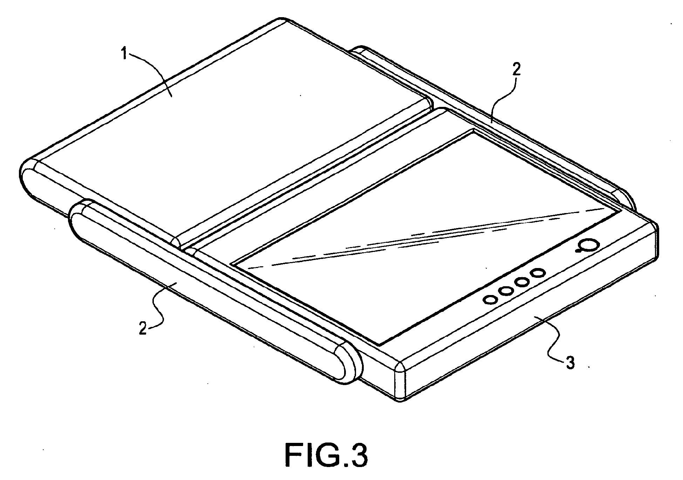

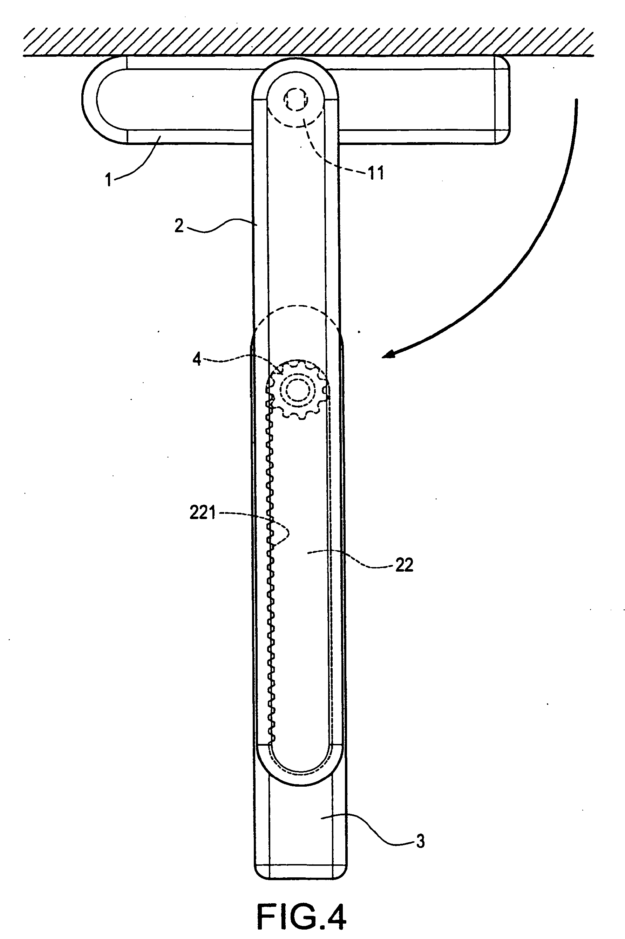

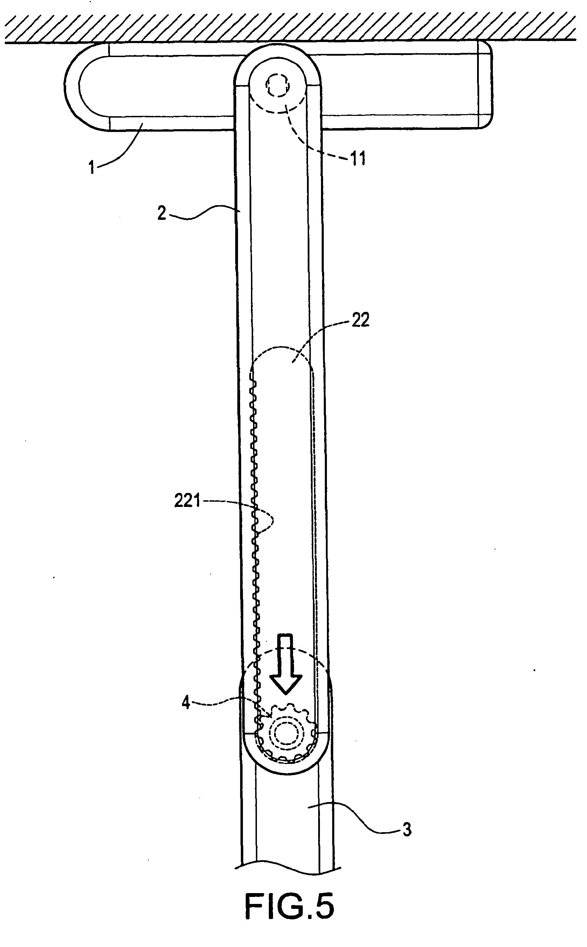

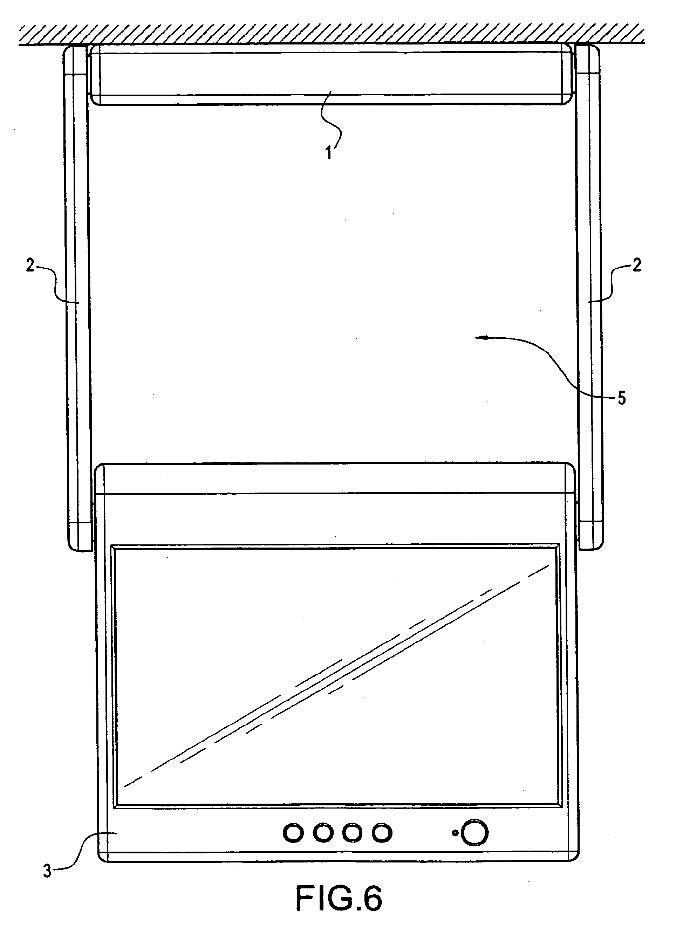

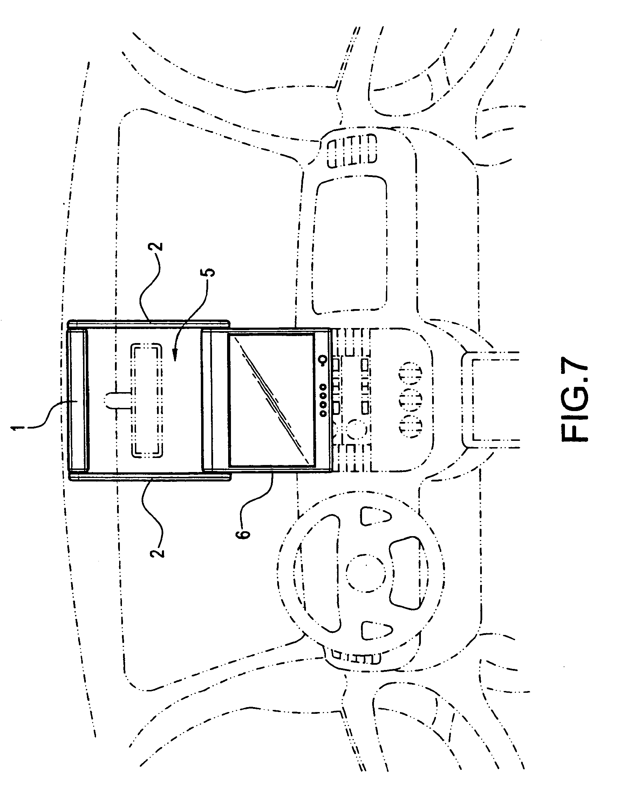

Please refer to Fig. 3, which is a perspective view of the present invention. As shown in this figure, the automotive display is provided on the top surface with the car body under a folded state and is located at a position corresponding to that of the rear-view mirror exactly (Fig. 7). When a user intends to use the automotive display, the user pulls downwards the connecting rods 2 as indicated by the arrow, so that the connecting rods 2 and the base 1 are perpendicular to each other as shown in Fig. 4. Via the movement of the gear 4 on the racks 221, the screen 3 is guided downwards to the lowest end of the accommodating groove 22 as shown in Fig. 5. After the screen 3 is lowered to the lowest end of the connecting rod 2, as shown in Fig. 6, a hollowed space 5 is formed among the base 1, the screen 3 and the connecting rods 2. As shown in Fig. 7, the hollowed space 5 is located to correspond to the position of the rear-view mirror, so that the driver can watch for the moving vehicles in back of his/her car via the hollowed space 5. In this way, the field of view and safety in driving can be guaranteed. In addition, the relative position of the gear 4 within the accommodating groove 22 is used to change the position of the screen 3 accordingly, thereby changing the size of the hollowed space 5 to conform to the field of view for different drivers.

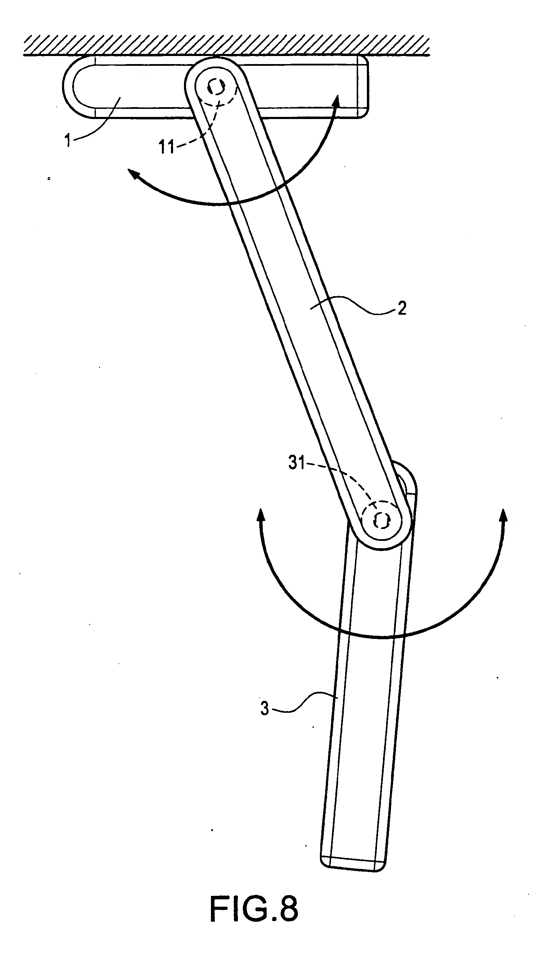

Furthermore, as shown in Fig. 8, via the pivotal connection between the connecting mounts 11 and the connecting rods 2 as well as the pivotal connection between the fixing mounts 31 and the connecting rods 2, the angle of the screen 3 with respect to the connecting rods 2 and the base 1 can be adjusted freely.

The above description is merely directed to a preferred embodiment of the present invention, but not be used to limit the scope of the present invention. Equivalent changes or modifications may still be made without departing from the spirit and scope of the present invention. Therefore, such changes or modifications are still embraced by the scope of the present invention defined in the appended claims.

## Claims

1. An automotive display, provided on a top surface within a car body and comprising:
- a base (1) fixed in the top surface within the car body;
- a connecting rod (2) pivotally connected to one side of the base (1), one end of **characterized by**:
- one end of the connecting rod (2) being provided with an accommodating groove (22), one inner side of the accommodating groove (22) having a rack (221);
- a gear (4) accommodated in the accommodating groove (22), the gear (4) being engaged with the rack (221);
- a screen (3) with its one side passing through the gear (4), thereby connecting the screen (3) and the connecting rod (2);
- whereby the rotation of the gear (4) with respect to the rack (221) allows the position of the screen (3) with respect to the connecting rod (2) to be adjusted.

2. The automotive display, according to claim 1, further located to correspond to a rear-view mirror in the car, wherein
- a hollowed space (5) is formed between the base (1) and the screen (3), the hollowed space (5) is located to correspond to the rear-view mirror.

3. The automotive display according to claim 1 or 2, wherein the interior of one side of the base (1) is provided with a connecting mount (11), a pivotal shaft (111) protrudes outwards from the connecting mount (11), the connecting rod (2) is provided with a trough (21) for pivotally connecting the pivotal shaft (111).

4. The automotive display according to claim 1 or 2, wherein the interior of one side of the screen (3) is provided with a fixing mount (31), a pivotal shaft (311) extends outwards from the fixing mount (31), the pivotal shaft (311) is used to insert through the gear (4).

## Patentansprüche

1. Kraftfahrzeuganzeige, die an einer oberen Oberfläche in einer Fahrzeugkarosserie vorgesehen ist und umfasst:
- eine Basis (1), die in der oberen Oberfläche in der Fahrzeugkarosserie befestigt ist;
- eine Verbindungsstange (2), die mit einer Seite der Basis (1) schwenkbar verbunden ist,
**dadurch gekennzeichnet, dass:**
- ein Ende der Verbindungsstange (2) mit einer Aufnahmenut (22) versehen ist, wobei eine Innenseite der Aufnahmenut (22) eine Innenzahnung (221) aufweist;
- ein Zahnrad (4) in der Aufnahmenut (22) aufgenommen ist, wobei das Zahnrad (4) mit der Innenzahnung (221) in Eingriff ist;
- ein Bildschirm (3) auf seiner einen Seite durch das Zahnrad (4) verläuft, wodurch der Bildschirm (3) und die Verbindungsstange (2) verbunden sind;
- wobei die Drehung des Zahnrades (4) in Bezug auf die Innenzahnung (221) die Einstellung der Position des Bildschirms (3) in Bezug auf die Verbindungsstange (2) ermöglicht.

2. Kraftfahrzeuganzeige nach Anspruch 1, die ferner so angeordnet ist, dass sie einem Rückspiegel im Fahrzeug entspricht, wobei
- zwischen der Basis (1) und dem Bildschirm (3) ein Hohlraum (5) ausgebildet ist, wobei der Hohlraum (5) so angeordnet ist, dass er dem Rückspiegel entspricht.

3. Kraftfahrzeuganzeige nach Anspruch 1 oder 2, wobei der Innenraum einer Seite der Basis (1) mit einer Verbindungshalterung (11) versehen ist, eine Schwenkwelle (111) von der Verbindungshalterung (11) nach außen vorsteht und die Verbindungsstange (2) mit einem Durchgangsloch (21) versehen ist, um die Schwenkwelle (111) schwenkbar zu verbinden.

4. Kraftfahrzeuganzeige nach Anspruch 1 oder 2, wobei der Innenraum einer Seite des Bildschirms (3) mit einer Befestigungshalterung (31) versehen ist, eine Schwenkwelle (311) sich von der Befestigungshalterung (31) nach außen erstreckt und die Schwenkwelle (311) verwendet wird, um durch das Zahnrad (4) hindurch eingesetzt zu werden.

## Revendications

1. Affichage pour automobile, prévue sur une surface supérieure dans une carrosserie de véhicule et comprenant :
- une base (1) fixée dans la surface supérieure à l'intérieur de la carrosserie de véhicule ;
- une tige de connexion (2) connectée en pivotement sur un côté de la base (1),
**caractérisé par** :
- une extrémité de la tige de connexion (2) est pourvue d'une gorge de logement (22), un côté intérieur de la gorge de logement (22) ayant une crémaillère (221) ;
- un engrenage (4) logé dans la gorge de logement (22), l'engrenage (4) étant en engagement avec la crémaillère (221) ;
- un écran (3) dont un côté passe à travers l'engrenage (4) en connectant ainsi l'écran (3) et la tige de connexion (2) ;
- grâce à quoi la rotation de l'engrenage (4) par rapport à la crémaillère (221) permet d'ajuster la position de l'écran (3) par rapport à la tige de connexion (2).

2. Affichage pour automobile selon la revendication 1, placé en outre de manière à correspondre à un rétroviseur dans le véhicule, dans lequel
- un espace creux (5) est formé entre la base (1) et l'écran (3), l'espace creux (5) étant situé de manière à correspondre au rétroviseur.

3. Affichage pour automobile selon la revendication 1 ou 2, dans lequel l'intérieur d'un côté de la base (1) est pourvu d'une monture de connexion (11), une tige de pivotement (111) se projette à l'extérieur depuis la monture de connexion (11), la tige de connexion (2) est pourvue d'une auge (21) pour connecter en pivotement la tige de pivotement (111).

4. Affichage pour automobile selon la revendication 1 ou 2, dans lequel l'intérieur d'un côté de l'écran (3) est pourvu d'une monture de fixation (31), une tige de pivotement (311) s'étend vers l'extérieur depuis la monture de fixation (31), et la tige de pivotement (311) est utilisée pour être insérée à travers l'engrenage (4).
